# EUROPÄISCHE PATENTANMELDUNG

(11) **EP 3 239 676 A1**
(43) Veröffentlichungstag der Anmeldung: **01.11.2017**
(21) Anmeldenummer: 17174538.3
(22) Anmeldetag: 07.03.2012
(51) Int. Cl.: G01L 1/22, G01L 5/16

(54) **KRAFTMESSSENSOR**

(30) Priorität: 19.07.2011 US 201161509185 P
(62) Teilanmeldung aus: 12158446.0
(71) Anmelder: MAGNA STEYR Fahrzeugtechnik AG & Co KG, 8041 Graz (AT)
(72) Erfinder: MEHLMAUER, Andreas, 8160 Weiz (AT); MiTSCH, Marcus, 3412 Kierling (AT); ROBIER, Ferdinand, 8071 Wagersbach (AT)
(74) Vertreter: Zangger, Bernd

(57) **Zusammenfassung**

Ein Kraftmeßsensor (3a, 3b, 3A..3D), umfassend
- zwei erste Dehnmeßstreifen (11, 12) zur Messung einer Kraft in einer ersten Richtung (z),
- zwei zweite Dehnmeßstreifen (21, 22) zur Messung einer Kraft normal zur genannten Richtung (z),
- zumindest einen dritten Dehnmeßstreifen (31,33) zur Messung einer Kraft in einem Winkel von +45° zur genannten Richtung (z) und
- zumindest einen vierten Dehnmeßstreifen (32, 34) zur Messung einer Kraft in einem Winkel von -45° zur genannten Richtung (z) auf einem gemeinsamen Substrat.

## Beschreibung

### TECHNISCHES GEBIET

Die Erfindung betrifft einen Kraftmeßsensor, insbesondere für einen Meßkörper zur Messung von Kräften sowie für eine Meßanordnung zur Messung von Kräften.

### STAND DER TECHNIK

Die Messung von Kräften mit Hilfe der Verformung von Meßkörpern ist prinzipiell bekannt. Beispielsweise offenbart die CN 2156494 Y dazu einen Meßkörper, welcher in einem Abschnitt vier voneinander beabstandete, entlang einer Längsachse ausgerichtete Stege umfasst, an denen Kraftmeßsensoren angebracht sind. Mit diesen können Kräfte normal auf die genannte Längsachse ermittelt werden. Zur Messung von Kräften in der genannten Längsrichtung weist der aus der CN 2156494 Y bekannte Meßkörper in einem weiteren Abschnitt zwei zusätzliche Stege mit Kraftmeßsensoren auf. Weitere Beispiele für Meßkörper sind etwa aus der DE 37 01 372 A1 und der US 3,696,317 A bekannt.

Nachteilig an dem in der CN 2156494 Y offenbarten Meßkörper ist, dass er relativ kompliziert aufgebaut ist und auch volumensmäßig relativ groß ist.

Aus der US 2009/007696 A1 ist ein Meßkörper bekannt, der vier Stege zwischen zwei Basisflächen aufweist, wobei die Stege an die Basisflächen geschweißt sind. Dehnmessstreifen sind auf den Stegen einzeln verteilt.

Aus DE 195 25 231 A1 ist ein Drehmomentsensor bekannt, mit zwei in axialem Abstand angeordneten Flanschen, die über vier Stege miteinander verbunden sind.

### OFFENBARUNG DER ERFINDUNG

Die Aufgabe der Erfindung ist es daher, einen verbesserten Kraftmeßsensor anzugeben, geeignet für einen verbesserten Meßkörper und eine verbesserte Meßanordnung. Insbesondere soll eine dreidimensionale Kraftmessung bei vereinfachtem Aufbau ermöglicht werden.

Die Aufgabe der Erfindung wird mit einem Kraftmeßsensor gelöst, umfassend
- zwei erste Dehnmeßstreifen zur Messung einer Kraft in einer ersten Richtung,
- zwei zweite Dehnmeßstreifen zur Messung einer Kraft normal zur genannten Richtung,
- zumindest einen dritten Dehnmeßstreifen zur Messung einer Kraft in einem Winkel von +45° zur genannten Richtung und
- zumindest einen vierten Dehnmeßstreifen zur Messung einer Kraft in einem Winkel von -45° zur genannten Richtung auf einem gemeinsamen Substrat.

Bevorzugt weist der vorgestellte Kraftmeßsensor
- zwei dritte Dehnmeßstreifen zur Messung einer Kraft in einem Winkel von +45° zur genannten Richtung und
- zwei vierte Dehnmeßstreifen zur Messung einer Kraft in einem Winkel von -45° zur genannten Richtung auf.

Der Kraftmeßsensor ist geeignet für einen Meßkörper zur Messung von Kräften, umfassend zwei voneinander beabstandete Basisteile, mit je wenigstens einer Montagefläche zur Einleitung der zu messenden Kräfte, vier identische, voneinander beabstandete, entlang einer Längsachse ausgerichtete und in einem Quadrat angeordnete Stege, welche mit den beiden Basisteilen an in der Längsachse beabstandeten Verbindungsflächen verbunden sind, sowie Kraftmeßsensoren an jedem der genannten Stege, wobei der Meßkörper nur Kraftmeßsensoren an den Stegen umfasst.

Darüber hinaus ist der Kraftmeßsensor geeignet für eine Meßanordnung mit einem Meßkörper der oben erwähnten Art, wobei in den vier Abschnitten einer Wheatstoneschen Meßbrücke zur Messung einer Kraft in der genannten Längsachse des Meßkörpers bei gleichbleibendem Richtungssinn angeordnet sind:
- in einem ersten Abschnitt die ersten Dehnmeßstreifen eines ersten Stegs und die ersten Dehnmeßstreifen eines gegenüberliegenden dritten Stegs,
- in einem zweiten Abschnitt die zweiten Dehnmeßstreifen eines zum ersten Steg benachbarten zweiten Stegs und die zweiten Dehnmeßstreifen eines dem zweiten Steg gegenüberliegenden vierten Stegs,
- in einem dritten Abschnitt die ersten Dehnmeßstreifen des zweiten Stegs und die ersten Dehnmeßstreifen des vierten Stegs und
- in einem vierten Abschnitt die zweiten Dehnmeßstreifen des ersten Stegs und die zweiten Dehnmeßstreifen des dritten Stegs.

Schließlich ist der Kraftmeßsensor geeignet für eine Meßanordnung mit einem Meßkörper der oben erwähnten Art, wobei, in den vier Abschnitten einer Wheatstoneschen Meßbrücke zur Messung einer Kraft normal auf die Meßebene eines ersten Stegs bei gleichbleibendem Richtungssinn angeordnet sind:
- in einem ersten Abschnitt die dritten Dehnmeßstreifen eines dem ersten Steg benachbarten zweiten Stegs,
- in einem zweiten Abschnitt die vierten Dehnmeßstreifen des zweiten Stegs,
- in einem dritten Abschnitt die vierten Dehnmeßstreifen eines dem zweiten Steg ,gegenüberliegenden vierten Stegs und
- in einem vierten Abschnitt die dritten Dehnmeßstreifen des vierten Stegs.

Auf diese Weise wird eine dreidimensionale Kraftmessung mit nur geringem Aufwand ermöglicht. Der dazu nötige Meßkörper ist relativ einfach aufgebaut und benötigt nur geringes Bauvolumen.

Der Begriff "Kraftneßsensor" ist dabei so zu verstehen, dass es sich um einen Sensor handelt, über welchen letztlich die Kraft ermittelt werden kann. Direkt gemessen wird meistens nicht die Kraft, sondern bevorzugt eine Dehnung.

Ein "Kraftmeßsensor" bildet im Rahmen der Erfindung eine Gruppe von Dehnmeßstreifen zur Messung einer Kraft oder Dehnung in nur einer Richtung.

"Im Quadrat angeordnet" bedeutet im Rahmen der Erfindung, dass die Schwerpunkte der Stegquerschnitte in der Mitte der Seitenkanten eines Quadrats liegen, die Querschnitte zweier benachbarter Stege um jeweils 90° gegeneinander verdreht sind und der Gesamtquerschnitt der Stege symmetrisch um die Hauptachsen des genannten Quadrats ist.

Die "Längsachse der Stege" verläuft durch den Schwerpunkt des genannten Quadrats und ist normal zu diesem ausgerichtet.

Die "Meßebene" ist jene Ebene, in der die an einem Steg angebrachten Kraftmeßsensoren angeordnet sind.

Eine günstige Variante eines Meßkörpers ergibt sich, wenn die Kraftmeßsensoren an jedem der Stege identisch sind. Auf diese Weise ergeben sich symmetrische Verhältnisse bei den von den Kraftmeßsensoren erhaltenen Signalen, wodurch die Auswertung derselben vereinfacht wird.

Vorteilhaft ist es, wenn jeder Steg eine Meßebene aufweist, die parallel zur Längsachse der Stege ausgerichtet ist, insbesondere zusätzlich parallel zu einer Seitenkante des genannten Quadrats, und wenn in jeder Meßebene eine identische und symmetrische Anordnung von Kraftmeßsensoren vorgesehen ist, jeweils umfassend
- je zwei erste Dehnmeßstreifen zur Messung einer Kraft in der genannten Längsachse des Meßkörpers,
- je zwei zweite Dehnmeßstreifen zur Messung einer Kraft normal zur genannten Längsachse,
- je zumindest ein dritter Dehnmeßstreifenzur Messung einer Kraft in einem Winkel von +45° zur genannten Längsachse und
- je zumindest ein vierter Dehnmeßstreifenzur Messung einer Kraft in einem Winkel von -45° zur genannten Längsachse.

Auf diese Weise ist es möglich, mit dem Meßkörper Kräfte in allen drei Dimensionen zu messen, wobei die Kraftmessung beziehungsweise die Auswertung der erhaltenen Meßsignale durch den symmetrischen Aufbau besonders genau ist. Durch den erfindungsgemäßen Aufbau ist das Übersprechen unbelasteter Zweige/Kanäle minimiert, sodass die Meßgenauigkeit steigt. Der Meßfehler wird dabei einerseits durch den symmetrischen Aufbau des Meßkörpers und andererseits durch die gewählte Anordnung der Dehnmeßstreifen minimiert.

Besonders vorteilhaft ist es in diesem Zusammenhang auch, wenn
- je zwei dritte Dehnmeßstreifen zur Messung einer Kraft in einem Winkel von +45° zur genannten Längsachse und
- je zwei vierte Dehnmeßstreifen zur Messung einer Kraft in einem Winkel von -45° zur genannten Längsachse angeordnet sind.

Dadurch ist es möglich einen Kraftmeßsensor zu schaffen, der um zwei Achsen symmetrisch, beziehungsweise punktsymmetrisch ist. Die Kraftmessung wird durch die Symmetrie noch weiter vereinfacht.

Günstig ist es auch, wenn die Basisteile des Meßkörpers identisch sind, insbesondere mit zueinander parallelen Montageflächen. Dadurch kann der Meßkörper in zwei verschiedenen Lagen bei ansonsten gleicher Funktion verwendet werden. Fehler beim Einbau eines Meßkörpers in ein zu vermessendes Bauteil können somit vermieden werden.

Vorzugsweise sind die Stege als parallel zur Längsachse ausgerichtete Prismen ausgebildet und haben einen rechteckförmigen Querschnitt. Dadurch können die Stege leicht hergestellt werden. Besonders vorteilhaft ist es, wenn der Meßkörper punktsymmetrisch ausgebildet ist. Wegen des hohen Grads an Symmetrie ist die Kraftmessung beziehungsweise die Auswertung der Meßsignale unter Verwendung eines solchen Meßkörpers besonders einfach.

Vorzugsweise ist der Meßkörper einstückig ausgebildet. Auf diese Weise können weitgehend konstante Materialeigenschaften im Meßkörper und somit hohe Meßgenauigkeit sichergestellt werden.

Günstig ist es, wenn die Breite eines Steges geringer ist als der Abstand seiner beiden benachbarten Stege. Auf diese Weise wird sichergestellt, dass sich die Stege frei bewegen können. Weiterhin kann so auch ein Zugang für ein Fräswerkzeug zur Verfügung gestellt werden, wenn der Meßkörper zum Beispiel aus dem Vollen gefräst wird.

An dieser Stelle wird angemerkt, dass sich die zum Meßkörper offenbarten Varianten und die daraus resultierenden Vorteile gleichermaßen auf den Kraftmeßsensor sowie auf die Meßanordnung beziehen und umgekehrt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein erstes Beispiel eines Meßkörpers;
- Figur 2: wie Fig. 1, nur mit podestartigen Teilen in seinem Inneren;
- Figur 3: wie Fig. 2 nur mit sich mittig verjüngenden Stegen;
- Figur 4: ein erstes Beispiel für einen Kraftsensor mit mehreren Dehnmeßstreifen;
- Figur 5: wie Fig. 4, nur mit zusätzlichen, schräg angeordneten Dehnmeßstreifen;
- Figur 6: eine beispielhafte Meßanordnung zur Messung von Kräften in z-Richtung;
- Figur 7: eine beispielhafte Meßanordnung zur Messung von Kräften in x-Richtung und
- Figur 8: eine beispielhafte Meßanordnung zur Messung von Kräften in y-Richtung.

### DETAILIERTE BESCHREIBUNG DER ERFINDUNG

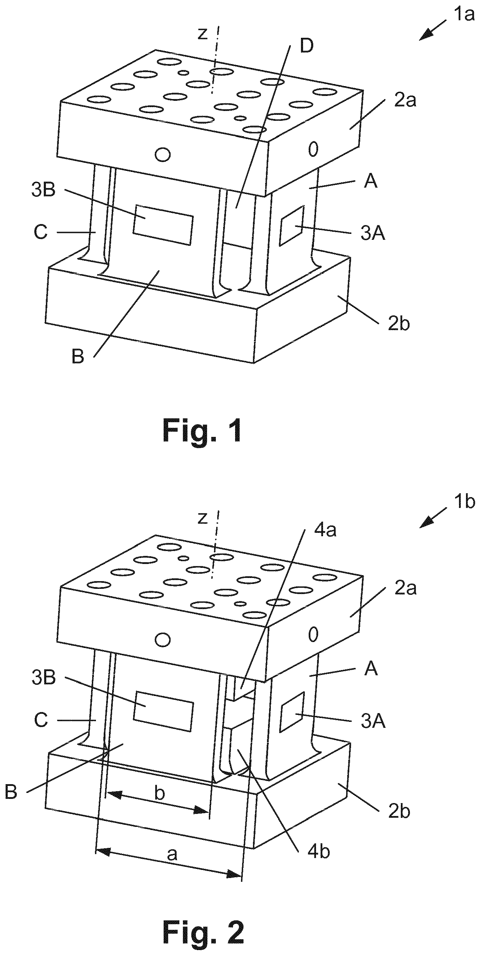

Fig. 1. zeigt ein erstes Beispiel eines Meßkörpers 1a zur Messung von Kräften, umfassend zwei voneinander beabstandete Basisteile 2a, 2b, mit je wenigstens einer Montagefläche zur Einleitung der zu messenden Kräfte und vier identische, voneinander beabstandete, entlang einer Längsachse z ausgerichtete und in einem Quadrat angeordnete Stege A..D, welche die beiden Basisteile 2a, 2b an in der Längsachse beabstandeten Verbindungsflächen verbinden. An jedem der genannten Stege A..D sind Kraftmeßsensoren 3A..3D angeordnet. Der Meßkörper 1a umfasst sonst keine weiteren Kraftmeßsensoren.

In dem in Fig. 1 konkret dargestellten Beispiel sind die Basisteile 2a, 2b identisch und weisen zueinander parallele Montageflächen auf, in denen eine Vielzahl von Montagelöchern vorgesehen ist. Die Stege A..D des Meßkörpers 1a sind in diesem Beispiel als parallel zur Längsachse z ausgerichtete Prismen ausgebildet, welche rechteckförmigen Querschnitt haben. Darüber hinaus kann der Meßkörper 1a einstückig ausgebildet sein und beispielsweise aus Vollmetall gefräst sein. Fig. 2 zeigt ein weiteres Beispiel eines Meßkörpers 1b, welcher dem Meßkörper 1a sehr ähnlich ist. Im Unterschied dazu sind aber im Inneren des Meßkörpers 1b podestartige Teile zu sehen, die Überbleibsel eines nicht vollständig ausgefrästen Innenraums sind. Diese stören den Meßvorgang aber nicht, sodass der Bearbeitungsvorgang für die Herstellung des Meßkörpers 1b durch diese Vorgangsweise deutlich verkürzt und die Standzeit des Bearbeitungswerkzeugs verlängert wird. In der Fig. 2 ist auch gut zu sehen, dass die Breite b eines Steges A..D des Meßkörpers 1b geringer ist als der Abstand a seiner beiden benachbarten Stege A..D. Dasselbe gilt auch für den Meßkörper 1a. Auf diese Weise wird einerseits sichergestellt, dass sich die Stege A..D frei bewegen können und andererseits auch ein Zugang für ein Fräswerkzeug vorhanden ist.

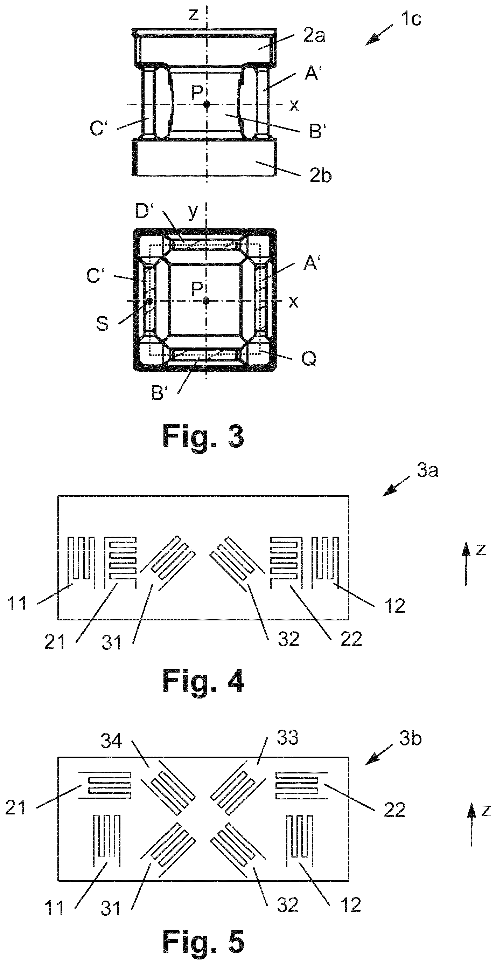

Fig. 3 zeigt schließlich ein drittes Beispiel eines Meßkörpers 1c in Grund- und Aufriss, welcher ebenfalls ähnlich aufgebaut ist wie die Meßkörper 1a und 1b. Im Unterschied dazu, weist der Meßkörper 1c aber keine prismatischen Stege, sondern sich in der Mitte verjüngende Stege A'..D' auf, die aber ebenfalls in jeder Schnittebene einen rechteckförmigen Querschnitt aufweisen.

In Fig. 3 ist auch gut zu sehen, dass die Stege A'..D' "im Quadrat" angeordnet sind. Dies bedeutet, dass die Schwerpunkte S der Stegquerschnitte in der Mitte der Seitenkanten eines Quadrats Q (in der Fig. 3 punktiert dargestellt) liegen. Zudem sind die Querschnitte zweier benachbarter Stege A'..D' um jeweils 90° gegeneinander verdreht, und der Gesamtquerschnitt der Stege A'..D' ist symmetrisch um die Hauptachsen des genannten Quadrats Q. Die Längsachse z des Meßkörpers 1c beziehungsweise der Stege A'..D' verläuft durch den Schwerpunkt des genannten Quadrats Q und ist normal zu diesem ausgerichtet. An dieser Stelle wird angemerkt, dass auch die Stege A..D der Meßkörper 1a, 1b "im Quadrat" angeordnet sind. Die Meßkörper 1a..1c weisen auch noch eine weitere spezielle Eigenschaft auf. Diese sind nämlich punktsymmetrisch um einen Punkt P ausgebildet.

Fig. 4 zeigt nun einen erfindungsgemäßen Kraftmeßsensor 3a, welcher mehrere Dehnmeßstreifen 11, 12, 21, 22, 31, 32 umfasst, die jeweils eine Kraft in eine Richtung messen. Der Kraftmeßsensor 3a bildet somit eine Gruppe solcher Dehnmeßstreifen 11, 12, 21, 22, 31, 32. Konkret umfasst der Kraftmeßsensor 3a:
- zwei erste Dehnmeßstreifen 11, 12 zur Messung einer Kraft in einer ersten Richtung z
- zwei zweite Dehnmeßstreifen 21, 22 zur Messung einer Kraft normal zur genannten Richtung z,
- einen dritten Dehnmeßstreifen 31 zur Messung einer Kraft in einem Winkel von +45° zur genannten Richtung z und
- einen vierten Dehnmeßstreifen 32 zur Messung einer Kraft in einem Winkel von -45° zur genannten Richtung z auf einem gemeinsamen Substrat.

Fig. 5 zeigt einen weiteren erfindungsgemäßen Kraftmeßsensor 3b, welcher dem in Fig. 4 dargestellten Kraftmeßsensor 3b sehr ähnlich ist. Im Unterschied dazu umfasst der Kraftmeßsensor 3b:
- zwei dritte Dehnmeßstreifen 31, 33 zur Messung einer Kraft in einem Winkel von +45° zur genannten Richtung z und
- zwei vierte Dehnmeßstreifen 32, 34 zur Messung einer Kraft in einem Winkel von
- 45° zur genannten Richtung z.

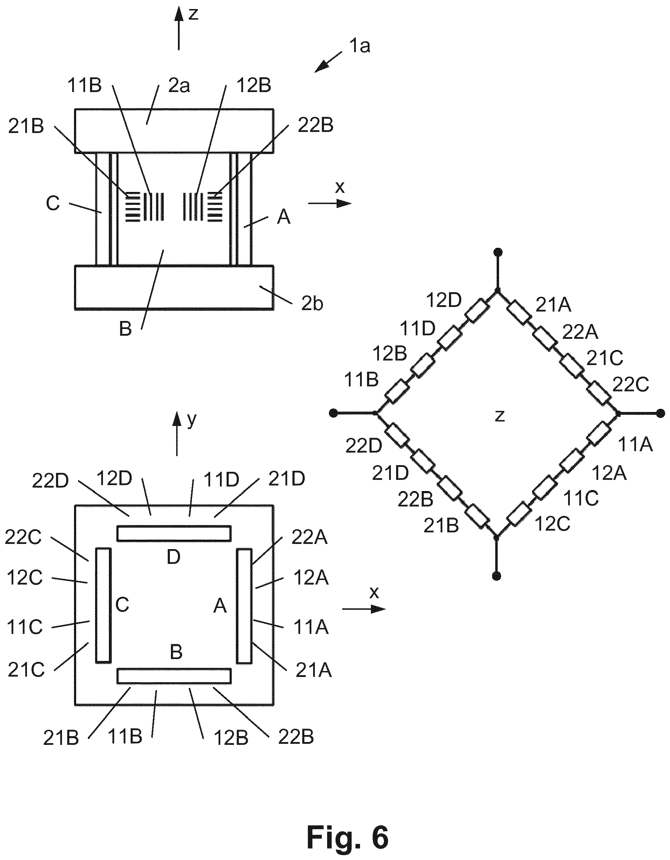

Die Figuren 6 bis 8 zeigen nun, wie ein Meßkörper 1a..1c gemeinsam mit einem Kraftsensor 3a, 3b verwendet werden kann:
Ein "Kraftmeßsensor" bildet im Rahmen der Erfindung eine Gruppe von Dehnmeßstreifen. Im gegebenen Beispiel ist der Meßkörper 1a mit Kraftsensoren 3b (siehe Fig. 5) ausgestattet, welche jeweils eine Gruppe von Dehnmeßstreifen 11, 12, 21, 22, 31..34 bilden. Beispielsweise werden diese aufgeklebt.

Jeder Steg A..D des Meßkörpers 1a weist eine Meßebene auf, die parallel zur Längsachse z der Stege A..D ausgerichtet ist. In dem in Fig. 6 dargestellten Beispiel ist die Meßebene eines Stegs A..D überdies parallel zu einer Seitenkante des Quadrats Q (siehe auch Fig. 3) ausgerichtet. Mit anderen Worten befindet sich die Meßebene eines Stegs A..D auf dessen Außenfläche. In jeder Meßebene ist nun eine identische und symmetrische Anordnung von Dehnmeßstreifen 11A..12D, 21A..22D, 31A..34D vorgesehen. Somit sind beispielsweise am Steg A:
- zwei erste Dehnmeßstreifen 11A, 12A zur Messung einer Kraft in der genannten Längsachse z
- zwei zweite Dehnmeßstreifen 21A, 22A zur Messung einer Kraft normal zur genannten Längsachse z,
- zwei dritte Dehnmeßstreifen 31A, 33A zur Messung einer Kraft in einem Winkel von +45° zur genannten Längsachse z und
- zwei vierte Dehnmeßstreifen 32A, 34A zur Messung einer Kraft in einem Winkel von -45° zur genannten Längsachse z angeordnet.
Die Stege B..D sind in analoger Weise mit Dehnmeßstreifen 11B..12D, 21B..22D, 31B..34D ausgestattet.

Zur Messung einer Kraft in der Längsachse z des Meßkörpers 1a wird eine Meßanordnung mit dem Meßkörper 1a vorgeschlagen, wobei in den vier Abschnitten einer Wheatstoneschen Meßbrücke zur Messung dieser Kraft bei gleichbleibendem Richtungssinn angeordnet sind:
- in einem ersten Abschnitt die ersten Dehnmeßstreifen 11A, 12A eines ersten Stegs A und die ersten Dehnmeßstreifen 11C, 12C eines gegenüberliegenden dritten Stegs C,
- in einem zweiten Abschnitt die zweiten Dehnmeßstreifen 21B, 22B eines zum ersten Steg A benachbarten zweiten Stegs B und die zweiten Dehnmeßstreifen 21D, 22D eines dem zweiten Steg B gegenüberliegenden vierten Stegs D,
- in einem dritten Abschnitt die ersten Dehnmeßstreifen 11B, 12B des zweiten Stegs B und die ersten Dehnmeßstreifen 11D, 12D des vierten Stegs D und
- in einem vierten Abschnitt die zweiten Dehnmeßstreifen 21A, 22A des ersten Stegs A und die zweiten Dehnmeßstreifen 21C, 22C des dritten Stegs C.

Im Betrieb wird an die Meßbrücke eine Spannungsquelle in der einen Diagonalen und ein Spannungsmessgerät in der anderen Diagonale angeschlossen. Die Auswertung des von der Meßbrücke erhaltenen Signals kann in an sich bekannter Weise erfolgen und wird daher nicht näher erläutert.

Zu beachten ist, dass in der Fig. 6 nur die zur Messung einer Kraft in der Längsrichtung z benötigten Dehnmeßstreifen 11A..12D, 21A..22D dargestellt sind. Die Dehnmeßstreifen 31A..34D wurden in der Fig. 6 der besseren Übersicht halber weggelassen.

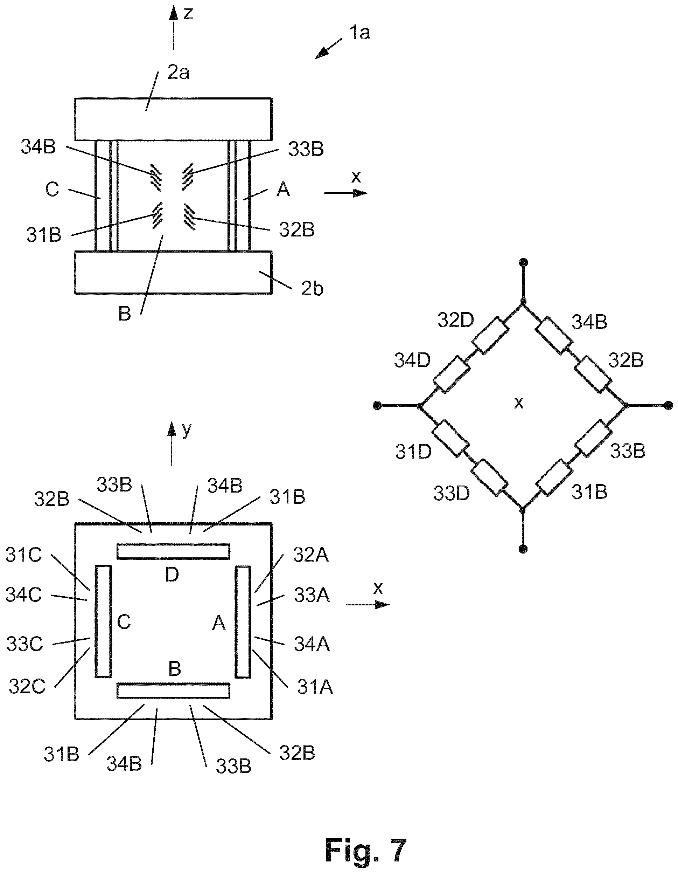

Fig. 7 zeigt nun wie eine Kraft normal auf eine Meßebene eines Stegs A..D gemessen werden kann. Konkret wird in Fig. 7 eine auf die Meßebene des Stegs A oder C gerichtete Kraft, also eine Kraft in x-Richtung gemessen. Dazu sind in den vier Abschnitten einer Wheatstoneschen Meßbrücke bei gleichbleibendem Richtungssinn angeordnet:
- in einem ersten Abschnitt die dritten Dehnmeßstreifen 31B, 33B eines dem ersten Steg A benachbarten zweiten Stegs B,
- in einem zweiten Abschnitt die vierten Dehnmeßstreifen 32B, 34B des zweiten Stegs B,
- in einem dritten Abschnitt die vierten Dehnmeßstreifen 32D, 34D eines dem zweiten Steg B gegenüberliegenden vierten Stegs D und
- in einem vierten Abschnitt die dritten Dehnmeßstreifen 31D, 33D des vierten Stegs D. Wie aus dem dargestellten Beispiel leicht ersichtlich ist, wird der Aufbau der Meßbrücke auch bei einer Vertauschung der Stege A und C nicht verändert.

Zu beachten ist, dass in der Fig. 7 nur die zur Messung einer Kraft normal auf die Längsrichtung z benötigten Dehnmeßstreifen 31A..34D dargestellt sind. Die Dehnmeßstreifen 11A..12D, 21A..22D wurden in der Fig. 7 der besseren Übersicht halber weggelassen.

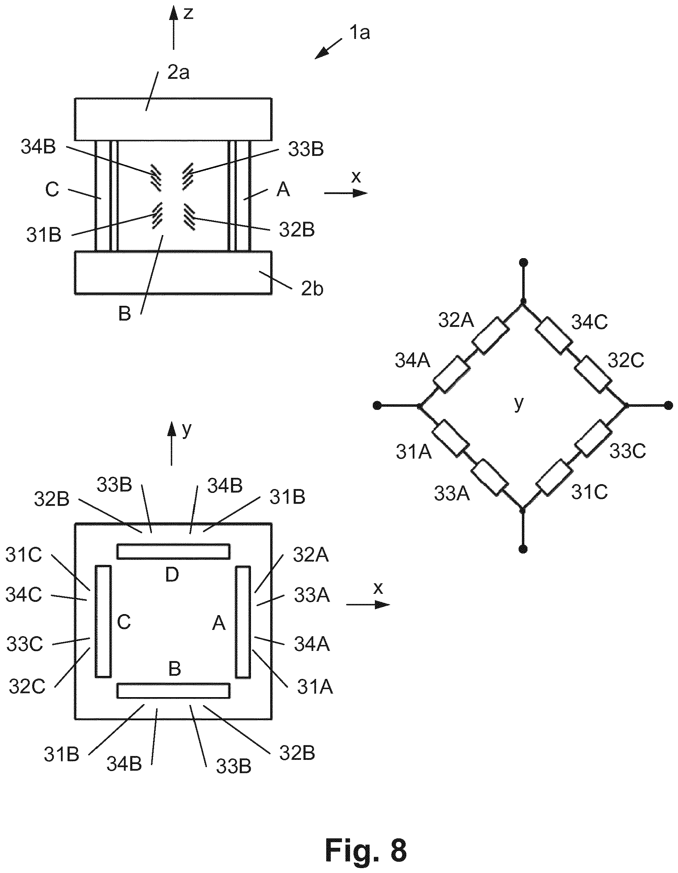

Fig. 8 zeigt nun wie eine normal auf die Meßebene des Stegs B oder D gerichtete Kraft, also eine Kraft in y-Richtung gemessen werden kann. Dabei tauschen die Stege A, C und B, D in der schon gezeigten Meßbrücke ihre Rollen. Somit sind in den vier Abschnitten einer Wheatstoneschen Meßbrücke bei gleichbleibendem Richtungssinn angeordnet:
- in einem ersten Abschnitt die dritten Dehnmeßstreifen 31A, 33A eines dem zweiten Steg B benachbarten ersten Stegs A,
- in einem zweiten Abschnitt die vierten Dehnmeßstreifen 32A, 34A des ersten Stegs A,
- in einem dritten Abschnitt die vierten Dehnmeßstreifen 32C, 34C eines dem ersten Steg A gegenüberliegenden dritten Stegs C und
- in einem vierten Abschnitt die dritten Dehnmeßstreifen 31C, 33C des dritten Stegs C. Wie aus dem dargestellten Beispiel leicht ersichtlich ist, wird der Aufbau der Meßbrücke auch bei einer Vertauschung der Stege B und D nicht verändert.

Durch Superposition der Kraftkomponenten in x-, y- und z-Richtung kann auf einfache Weise die resultierende Kraft ermittelt werden.

In den Figuren 6 bis 8 wurde die Anordnung der Dehnmeßstreifen 11, 12, 21, 22, 31..34 verwendet, so wie sie in der Fig. 5 dargestellt ist. Dies ist aber keinesfalls notwendig. Beispielsweise kann auch eine Anordnung nach Fig. 4 verwendet werden. In der Meßbrücke nach Fig. 6 sind dann anstelle der Sensoren 31 und 33 nur der Sensor 31 und anstelle der Sensoren 32 und 34 nur der Sensor 32 einzusetzen. Analog ist zu verfahren, wenn anstelle eines einzelnen Sensors mehrere Sensoren vorgesehen sind. Wird beispielsweise der Sensor 11 durch mehrere Dehnmeßstreifen gebildet, so ist in den jeweiligen Meßbrücken eine Reihenschaltung der Dehnmeßstreifen einzufügen usw.

Abschließend wird angemerkt, dass die dargestellten Beispiele zwar vorteilhafte Ausgestaltungen der Erfindung sind, Abwandlungen des offenbarten Prinzips aber möglich sind.. Es können die Basisteile 2a, 2b und deren Montageflächen der jeweiligen Einbausituation angepasst werden, ohne das Meßprinzip zu verändern. Sie müssen also nicht identisch sein. Weiterhin befinden sich die Meßebenen nicht zwangsläufig an der dargestellten Position oder in der dargestellten Lage. Denkbar wäre beispielsweise auch, dass sich die Meßebene an der Innenseite der Stege A..D, A'..D' oder auch auf deren Seitenflächen befindet. Auch ist es für das dargestellte Meßprinzip nicht unbedingt erforderlich, dass die Dehnmeßstreifen 3a, 3b, 3A..3D, 11, 12, 21, 22, 31..34 als Dehnmeßstreifen im engeren Sinn ausgebildet sind. Denkbar wäre beispielsweise auch der Einsatz von Piezosensoren, magnetischen oder optischen Sensoren etc. Zu den letzeren zählen beispielsweise auch Faser-Bragg-Gitter. Auch ist es für das dargestellte Meßprinzip nicht notwendig dass der Meßkörper 1a..1c punktsymmetrisch um einen Punkt P ist, wenngleich dies aus Gründen der Symmetrie vorteilhaft ist.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass die dargestellten Meßkörper, Kraftmeßsensoren und Meßanordnungen selbstverständlich mehr Komponenten als dargestellt aufweisen können, ohne dass dadurch der Grundgedanke der vorliegenden Erfindung verlassen werden würde.

## Patentansprüche

1. Kraftmeßsensor (3a, 3b, 3A..3D), umfassend
- zwei erste Dehnmeßstreifen (11, 12) zur Messung einer Kraft in einer ersten Richtung (z),
- zwei zweite Dehnmeßstreifen (21, 22) zur Messung einer Kraft normal zur genannten Richtung (z),
- zumindest einen dritten Dehnmeßstreifen (31,33) zur Messung einer Kraft in einem Winkel von +45° zur genannten Richtung (z) und
- zumindest einen vierten Dehnmeßstreifen (32, 34) zur Messung einer Kraft in einem Winkel von -45° zur genannten Richtung (z) auf einem gemeinsamen Substrat.

2. Kraftmeßsensor (3a, 3b, 3A..3D) nach Anspruch 1, **gekennzeichnet durch**
- zwei dritte Dehnmeßstreifen (31,33) zur Messung einer Kraft in einem Winkel von +45° zur genannten Richtung (z) und
- zwei vierte Dehnmeßstreifen (32, 34) zur Messung einer Kraft in einem Winkel von -45° zur genannten Richtung (z).
